# EUROPÄISCHE PATENTSCHRIFT

(11) **EP 3 207 607 B1**
(45) Veröffentlichungstag und Bekanntmachung des Hinweises auf die Patenterteilung: **27.02.2019**
(21) Anmeldenummer: 15797031.0
(22) Anmeldetag: 06.11.2015
(51) Int. Cl.: H02B 13/055, H01B 3/16

(54) **ELEKTRISCHE ANLAGE MIT EINEM ELEKTRISCH ISOLIERENDEN GAS UND EIN RADIKALFÄNGER**
ELECTRIC SYSTEM WITH AN ELECTRICALLY INSULATING GAS AND FREE RADICAL SCAVENGER
INSTALLATION ÉLECTRIQUE COMPRENANT UN GAZ ÉLECTRIQUEMENT ISOLANT ET UN CAPTEUR DE RADICAUX LIBRES

(30) Priorität: 20.11.2014 DE 102014223677
(43) Veröffentlichungstag der Anmeldung: 23.08.2017
(73) Patentinhaber: Siemens Aktiengesellschaft, 80333 München (DE)
(72) Erfinder: HANEBUTH, Marc, 90482 Nürnberg (DE); GRONBACH, Peter, 90443 Nürnberg (DE); HAMMER, Thomas, 91334 Hemhofen (DE)
(86) Internationale Anmeldenummer: PCT/EP2015/075921
(87) Internationale Veröffentlichungsnummer: WO 2016/078935

(56) Entgegenhaltungen:
- FR-A1- 2 965 120
- US-A- 2 957 938
- US-A- 3 048 648

## Beschreibung

Die Erfindung betrifft eine elektrische Anlage mit einem Gehäuse, in welchem wenigstens ein elektrisches Bauteil aufgenommen ist. Das elektrische Bauteil ist hierbei von einem elektrisch isolierenden Gas umgeben.

In solchen elektrischen Anlagen, wie zum Beispiel gasisolierten Schaltanlagen oder gasisolierten Leitungen, wird häufig Schwefelhexafluorid (SF₆) wegen seiner guten Isoliereigenschaften eingesetzt. Zudem zeigt Schwefelhexafluorid als weitere positive Eigenschaft einen Trend zur Selbstheilung. Dies bedeutet, dass nach einem Zersetzen von Schwefelhexafluorid aus den Zersetzungsprodukten erneut Schwefelhexafluorid gebildet wird. Ein großer Nachteil der Verwendung von Schwefelhexafluorid als elektrisch isolierendes Gas in einer elektrischen Anlage ist allerdings, dass Schwefelhexafluorid ein sehr hohes Treibhauspotential hat. Derzeit gibt es daher Bestrebungen, diese Substanz zu ersetzen.

Als mögliche Kandidaten alternativer Isoliergase, also elektrisch isolierender Gase, welche anstelle von Schwefelhexafluorid in gasisolierten Schaltanlagen oder gasisolierten Leitungen eingesetzt werden können, werden derzeit insbesondere fluorhaltige organische Substanzen diskutiert.

Die US 2 957 938 A beschreibt die Verwendung von Perfluorcarbonen _in Form eines Gemischs von C₄F₆ und C₃F₈ als isolierendem Gas in einem Transformator.

Die US 3 048 648 A beschreibt die Verwendung von Perfluornitrilen als isolierendem Gas in einem Transformator.

Zudem beschreibt die FR 2 965 120 A1 ein Schaltgerät mit elektrischen Komponenten und einem Gas in einem dichten Gehäuse. Hierbei umfasst das Gas ein Fluorketon. Aufgrund eines Lichtbogens kann das Fluorketon ionisiert und thermisch zersetzt werden. Das Gehäuse umfasst Mittel zum Absorbieren von Molekülen, die sich nach einer Ionisierung oder thermischen Zersetzung des Fluorketons bilden. Als diese Mittel kommen Festkörper wie aktiviertes Aluminium, Aktivkohle oder ein karbonisiertes Molekularsieb zum Einsatz.

Des Weiteren beschreibt die WO 2014/053 661 A1 eine Vorrichtung zum Erzeugen oder Verteilen von elektrischer Energie, wobei in einem Gehäuse der Vorrichtung ein isolierendes Gas aufgenommen ist, welches eine Organofluorverbindung enthält. Die Vorrichtung umfasst des Weiteren ein Molekularsieb, welches mit dem isolierendes Gas in Kontakt ist. Hierbei ist eine Adsorptionsfähigkeit des Molekularsiebs für die Organofluorverbindung geringer als für ein Zersetzungsprodukt der Organofluorverbindung.

Die Verwendung von Adsorbentien zum Aufnehmen von Zersetzungsprodukten organischer Isolationsgase bringt jedoch Probleme mit sich. So wirkt das Adsorbieren von Zersetzungsprodukten nicht einer weiteren Bildung von Zersetzungsprodukten entgegen, wenn Radikale innerhalb des Gehäuses für das Zersetzen der Moleküle des elektrisch isolierenden Gases sorgen. Da in dem Gehäuse ein endlicher Vorrat an elektrisch isolierendem Gas enthalten ist und die Kapazität der Adsorbentien begrenzt ist, wird das Auftreten von mit der Zersetzung des elektrisch isolierenden Gases einhergehenden Problemen durch das Vorsehen von Adsorbentien lediglich verzögert.

In der WO 2014/053 661 A1 wird zudem angestrebt, eine Selektivität des Molekularsiebs hinsichtlich der Molekülgröße über definierte Porengrößen des Molekularsiebs zu erreichen. Dies soll dazu führen, dass nur die Zersetzungsprodukte, nicht aber das isolierende Gas adsorbiert wird. Jedoch können bei einem radikalischen Abbau des isolierenden Gases auch große Moleküle als Zersetzungsprodukte entstehen, welche nicht in die Poren des Molekularsiebs eintreten und damit von dem Molekularsieb nicht zurückgehalten werden können. Als ein Zersetzungsprodukt kann insbesondere Ruß entstehen, so dass es zu festen Ablagerungen an unerwünschten Positionen innerhalb der Vorrichtung kommen kann.

Innerhalb der elektrischen Anlage können sehr harsche Bedingungen vorliegen. Zum Beispiel können Entladungen oder Teilentladungen stattfinden. Es kann also grundsätzlich eine Umwandlung des elektrisch isolierenden Gases eintreten. Während jedoch Reaktionsprodukte von umgewandeltem Schwefelhexafluorid wieder zum Ausgangsmaterial Schwefelhexafluorid zurückreagieren, ist dies bei den oben genannten fluorhaltigen organischen Substanzen als dem elektrisch isolierenden Gas nicht der Fall. Es wird vielmehr eine Vielzahl organischer Substanzen aus Zersetzungsprodukten gebildet, welche unterschiedliche Konstitutionen und Molekülgrößen aufweisen können. Hierbei kann es auch zur Bildung von Ruß kommen. Neben einer grundsätzlich unerwünschten, undefinierten Mischung von Zersetzungsprodukten und Reaktionsprodukten mit undefinierten Isolationseigenschaften hat dies auch den Nachteil, dass sich toxische Substanzen bilden können.

Zum Zersetzen der Moleküle des elektrisch isolierenden Gases tragen insbesondere Radikale bei, also Moleküle mit mindestens einem ungepaarten Elektron. Solche Radikale bilden sich bei Entladungen und Teilentladungen, aber auch durch andere, in der Natur auftretende Prozesse wie den radioaktiven Zerfall oder aufgrund der Wirkung von kosmischer Strahlung. Demzufolge ist stets mit einem Vorliegen von Radikalen innerhalb eines Isolationsmediums wie dem elektrisch isolierenden Gas zu rechnen, auch wenn die Radikale hierbei in sehr geringen Konzentrationen vorkommen können. Diese Radikale neigen zu Kettenreaktionen, welche ein Zersetzen des elektrisch isolierenden Gases hervorrufen, welches organische gasförmige Substanzen enthält. Die von den Radikalen ausgelösten Reaktionen finden zudem kontinuierlich statt, so dass das elektrisch isolierende Gas selbst dann zerstört wird, wenn die elektrische Anlage stillsteht. Infolgedessen kann es innerhalb der elektrischen Anlage zur Bildung von toxischen Substanzen oder festen Ablagerungen kommen.

Die US 2 957 938 A beschreibt einen in einem Gehäuse angeordneten Transformator mit einem Kern und Wicklungen, wobei der Kern und die Wicklungen von einem elektrisch isolierenden Gas umgeben sind. Das Gas umfasst eine Mischung von C₄F₆ und C₃F₈. Es wird weiterhin offenbart, dass eine Reaktion von C₄F₆ mit freien Radikalen möglich ist.

Aufgabe der vorliegenden Erfindung ist es, eine elektrische Anlage anzugeben, welche die bekannte Anlage derart verbessert, dass deren Betrieb vereinfacht ist.

Diese Aufgabe wird durch eine elektrische Anlage mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Erfindungsgemäß ist der Radikalfänger auf einem Substrat immobilisiert. Es können so die Radikale gezielt an denjenigen Stellen der elektrischen Anlage gesammelt werden, wo sich der immobilisierte Radikalfänger befindet. Des Weiteren kann so bei einer Sättigung des Radikalfängers dieser zusammen mit dem Substrat, auf welchem er angeordnet ist, aus der elektrischen Anlage entfernt und durch einen unverbrauchten Radikalfänger ersetzt werden.

Außerdem kann die Stelle, an welcher der immobilisierte Radikalfänger angeordnet ist, so gewählt werden, dass der immobilisierte Radikalfänger und die von diesem abgefangenen Radikale innerhalb der elektrischen Anlage besonders wenig stören. Durch das Immobilisieren des Radikalfängers auf dem Substrat ist daher ein vereinfachter Betrieb der elektrischen Anlage ermöglicht.

Die erfindungsgemäße elektrische Anlage umfasst ein Gehäuse, in welchem wenigstens ein elektrisches Bauteil aufgenommen ist. Das elektrische Bauteil ist von einem elektrisch isolierenden Gas umgeben. Des Weiteren ist in der elektrischen Anlage wenigstens ein Radikalfänger vorhanden. Unter einem Radikalfänger ist hierbei eine Substanz zu verstehen, welche in der Lage ist, ein Radikal zumindest zeitweise zu binden und so den Energiegehalt des Radikals derart abzusenken, dass das Radikal nicht mehr oder zumindest weniger leicht mit einem Molekül des elektrisch isolierenden Gases reagiert. Mit anderen Worten reagiert der Radikalfänger mit einem freien Radikal unter Bildung einer Verbindung, welche weniger reaktiv ist als das freie Radikal alleine.

Durch das chemische Reagieren des Radikalfängers mit dem Radikal wird also die von dem Radikal oder freien Radikal induzierte Kettenreaktion unterbunden, welche ansonsten zu einem zunehmenden Zersetzen der Moleküle des elektrisch isolierenden Gases führt. Auf diese Weise wird insbesondere die Bildung von toxischen Substanzen oder störendem Ruß aus Zersetzungsprodukten des elektrisch isolierenden Gases zumindest weitgehend verhindert. Durch das Vorsehen des wenigstens einen Radikalfängers ist somit die Neigung der elektrischen Anlage zur fortdauernden Bildung von solchen unerwünschten Zersetzungsprodukten des elektrisch isolierenden Gases verringert.

Da bereits sehr geringe Konzentrationen an Radikalen zu einem kontinuierlichen Abbauprozess des elektrisch isolierenden Gases führen können, verhindert der wenigstens eine Radikalfänger diesen Abbau oder erschwert ihn zumindest.

Durch das Vorsehen des wenigstens einen Radikalfängers in der elektrischen Anlage wird des Weiteren das Problem der Zersetzung des elektrisch isolierenden Gases an der Ursache behandelt. Es werden nämlich nicht lediglich die Zersetzungsprodukte aus einem das elektrisch isolierende Gas enthaltenden Raum der elektrischen Anlage entfernt. Vielmehr werden die für die Zersetzung verantwortlichen Radikale aus einem solchen Gasraum entfernt.

Da Radikalfänger mit dem Radikal chemisch reagieren, ist eine besonders effektive Deaktivierung solcher Radikale mittels des wenigstens einen Radikalfängers möglich. Dies ist ein Vorteil im Vergleich zur Verwendung von aus dem Stand bekannten Adsorbentien, da Radikale nicht selektiv adsorbiert werden. Radikale unterscheiden sich nämlich nicht notwendigerweise in der Molekülgröße von den Molekülen, aus welchen sie durch eine Entladung oder Prozesse wie radioaktiven Zerfall oder kosmische Strahlung gebildet wurden. Zudem ist die Konzentration der Radikale in dem elektrisch isolierenden Gas üblicherweise um viele Größenordnungen niedriger als die des elektrisch isolierenden Gases selber. Auch insofern ist die Verwendung von Radikalfängern deutlich effizienter als die von Adsorbentien, bei welchen die Konzentrationen der zu adsorbierenden Substanzen eine Rolle spielen. Adsorbentien vermögen es nämlich nicht, mit hinreichend großer Selektivität ausschließlich oder in erster Linie Radikale zu adsorbieren. Demgegenüber lassen sich mit dem wenigstens einen Radikalfänger sehr gut Radikale aus dem Gehäuse entfernen, in welchem das elektrisch isolierende Gas das wenigstens eine elektrisch Bauteil umgibt.

Bei Ausbildung der elektrischen Anlage als gasisolierte Schaltanlage kann es sich bei dem wenigstens einen elektrischen Bauteil etwa um eine Schalteinrichtung wie einen Leistungsschalter oder einen Lasttrennschalter handeln, welcher in dem gasdichten Gehäuse angeordnet ist. Umfasst die elektrische Anlage eine gasisolierte Leitung, so kann es sich bei dem elektrischen Bauteil etwa um einen elektrischen Leiter handeln, welcher im dem dann als elektrisch isolierende Hülle ausgebildeten, gasdichten Gehäuse angeordnet ist.

Erfindungsgemäß ist der wenigstens eine Radikalfänger auf einem Substrat immobilisiert. Dies ermöglicht es, Radikale an derjenigen Stelle oder an denjenigen Stellen der elektrischen Anlage zu sammeln, wo sich der immobilisierte Radikalfänger befindet. Des Weiteren kann so insbesondere dafür gesorgt werden, dass bei einer Sättigung des wenigstens einen Radikalfängers dieser zusammen mit dem Substrat, auf welchem er angeordnet ist, aus der elektrischen Anlage entfernt und durch einen unverbrauchten Radikalfänger ersetzt wird. Dies vereinfacht den Betrieb der elektrischen Anlage. Zudem stört der immobilisierte Radikalfänger nicht innerhalb der elektrischen Anlage, da die Stelle, an welcher der immobilisierte Radikalfänger angeordnet ist, entsprechend gewählt werden kann.

Als Substrat für die Immobilisierung des Radikalfängers oder der Radikalfänger kommen prinzipiell sämtliche Feststoffe in Frage. Jedoch ist eine große spezifische Oberfläche des Substrats von Vorteil. Dann reicht nämlich eine besonders geringe Menge des wenigstens einen Radikalfängers, um hoch wirksam Radikale abzufangen. Daher können als Substrat bevorzugt ein Kieselgel, ein Aerogel, ein - insbesondere poröses - Glas, Aluminiumoxid, ein Zeolith oder Aktivkohle zum Einsatz kommen. Auf der Oberfläche eines solchen Substrats sind der oder die Radikalfänger immobilisiert, wobei dies durch Physisorption oder durch eine chemische Reaktion unter Ausbildung von - insbesondere kovalenten - Bindungen erfolgen kann. Wird beispielsweise Kieselgel als Substrat eingesetzt, so können kovalente Bindungen beispielsweise durch Silanisierung ausgebildet werden.

Durch die Anordnung des mindestens einen Radikalfängers auf dem Substrat kann der wenigstens eine Radikalfänger besonders sicher innerhalb der elektrischen Anlage immobilisiert werden.

Der wenigstens eine Radikalfänger kann einen reversiblen Radikalfänger umfassen oder als reversibler Radikalfänger ausgebildet sein. Ein solcher reversibler Radikalfänger katalysiert in der elektrischen Anlage eine chemische Reaktion zweier Radikale miteinander. Der reversible Radikalfänger kann also in seine Ursprungsform zurückreagieren und wird im Verlaufe seines Einsatzes nicht verbraucht.

Ein solcher reversibler Radikalfänger kann vielmehr ein Radikal zeitweise in einer weniger reaktiven Zwischenstufe halten, so dass eine aus dem Radikalfänger und dem Radikal gebildete Spezies weniger reaktiv ist als das Radikal alleine. Eine solche weniger reaktive Zwischenstufe führt dann dazu, dass keine Reaktion mit Molekülen des Isoliergases stattfindet. Wohl aber kann die reaktive Zwischenstufe mit einem weiteren Radikal reagieren. Bei einer solchen Reaktion des von dem reversiblen Radikalfänger in der weniger reaktiven Zwischenstufe gehaltenen Radikals mit einem weiteren Radikal wird der reversible Radikalfänger wieder freigegeben. Ein Vorteil von reversiblen Radikalfängern ist also, dass die Radikalfänger nicht innerhalb der elektrischen Anlage verbraucht werden. Vielmehr katalysieren sie lediglich eine Rekombination von zwei Radikalen, welche in Form von Bruchstücken der Moleküle des elektrisch isolierenden Gases in der elektrischen Anlage vorhanden sind, die (mindestens) ein ungepaartes Elektron aufweisen.

Beim Rekombinieren von Radikalen mittels reversibler Radikalfänger können jedoch andere Substanzen gebildet werden, als sie in dem elektrisch isolierenden Gas ursprünglich vorliegen. Es können also in einem gewissen Ausmaß undefinierte Zersetzungsprodukte in dem elektrisch isolierenden Gas gebildet werden. Dies geschieht jedoch deutlich langsamer, als es ohne das Vorsehen des wenigstens einen Radikalfängers der Fall wäre.

Als reversibler Radikalfänger kann insbesondere ein Phenol und/oder ein Phenolderivat wie etwa ein fluoriertes Phenol zum Einsatz kommen. Derartige phenolbasierte Radikalfänger haben sich als besonders wirksam erwiesen, wenn es darum geht, einen sich nicht verbrauchenden Radikalfänger bereitzustellen.

Zusätzlich oder alternativ kann der wenigstens eine Radikalfänger einen irreversiblen Radikalfänger umfassen, dessen Gehalt in der elektrischen Anlage infolge einer chemischen Reaktion des Radikalfängers mit einem Radikal sinkt. Ein solcher irreversibler Radikalfänger ist also eine Substanz, die zwar mit dem Radikal chemisch reagiert, aber im Gegensatz zum reversiblen Radikalfänger nicht in ihre Ursprungsform zurückreagiert. Im Verlaufe seines Einsatzes in der elektrischen Anlage reagiert also der irreversible Radikalfänger ab, und folglich sinkt sein Gehalt in der elektrischen Anlage.

Der irreversible Radikalfänger, welcher mit dem Radikal reagiert, hält das aus der Reaktion des Radikalfängers mit dem Radikal entstehende Produkt an der Position fest, an welcher sich der irreversible Radikalfänger befindet, sofern dieser Radikalfänger immobilisiert ist. So kann in vorteilhafter Weise eine Verunreinigung des elektrisch isolierenden Gases durch aus rekombinierten Radikalen gebildete Zersetzungsprodukte vermieden werden.

Als weiter vorteilhaft hat es sich gezeigt, wenn das Gehäuse über wenigstens eine Leitung mit einer Regeneriereinheit verbunden ist, in welcher der wenigstens eine Radikalfänger angeordnet ist. Dann sind nämlich die Regeneriereinheit und das Gehäuse, in welchem sich das wenigstens eine elektrische Bauteil befindet, räumlich getrennt, und es braucht nicht beim Bereitstellen des Gehäuses auf die Unterbringung des wenigstens einen Radikalfängers Rücksicht genommen zu werden. Dies vereinfacht die Auslegung der elektrischen Anlage und ermöglicht insbesondere eine Nachrüstung bestehender elektrischer Anlagen.

Hierbei hat es sich als vorteilhaft gezeigt, wenn wenigstens ein Verbindungselement vorgesehen ist, mittels welchem sich die Regeneriereinheit mit dem Gehäuse und/oder mit der wenigstens einen Leitung koppeln oder von dem Gehäuse und/oder der wenigstens einen Leitung abkoppeln lässt. Das wenigstens eine Verbindungselement ermöglicht so ein einfaches Austauschen der Regeneriereinheit. Es kann also bei Bedarf die Regeneriereinheit ausgewechselt werden, ohne dass der Betrieb der übrigen Komponenten der elektrischen Anlage unterbrochen zu werden braucht. Zudem kann die Regeneriereinheit genau dann von dem Gehäuse oder der wenigstens einen Leitung abgekoppelt werden, wenn ihre Fähigkeit, Radikale aus dem elektrisch isolierenden Gas aufzunehmen, zumindest weitgehend erschöpft ist.

Als Verbindungselemente können beispielsweise verschließbare Ventile oder Verschraubungen Verwendung finden, also insbesondere Verbindungselemente wie sie für Rohrleitungen zum Einsatz kommen, etwa Flansche, Kupplungen und dergleichen. Solche Verbindungselemente ermöglichen ein Abkoppeln der Regeneriereinheit von den übrigen Komponenten der elektrischen Anlage und ein anschließendes Koppeln einer neuen, unverbrauchten Regeneriereinheit mit diesen Komponenten auf besonders einfache Art und Weise. Die austauschbare Regeneriereinheit ermöglicht somit einen besonders lang andauernden ungestörten Betrieb der übrigen Komponenten der elektrischen Anlage.

Als weiter vorteilhaft hat es sich gezeigt, wenn eine Fördereinrichtung vorgesehen ist, mittels welcher sich eine Strömung des elektrisch isolierenden Gases von dem Gehäuse zu der Regeneriereinheit erzeugen lässt. Dadurch können mit dem elektrisch isolierenden Gas die aus den Molekülen des elektrisch isolierenden Gases gebildeten Zersetzungsprodukte, insbesondere die Radikale, hin zu der Regeneriereinheit gefördert werden, in welcher sich der wenigstens eine Radikalfänger befindet. Die Fördereinrichtung sorgt also für einen guten Transport des elektrisch isolierenden Gases von dem Gehäuse zu der Regeneriereinheit, in welcher die Radikale mittels des wenigstens einen Radikalfängers aus dem Gasstrom entfernt werden. Zudem sorgt die Fördereinrichtung für einen guten Austausch des elektrisch isolierenden Gases zwischen der Regeneriereinheit und dem Gehäuse, so dass insbesondere neu gebildete Radikale gut aus dem Gasstrom entfernt werden können. Durch das Abfangen der Radikale mittels des wenigstens einen Radikalfängers in der Regeneriereinheit können zudem die reaktiven Radikale aus der Gasphase entfernt werden, bevor sich große, molekulare Feststoffe wie etwa Rußpartikel bilden können.

Die Fördereinrichtung, welche insbesondere als Gebläse oder Kompressor ausgebildet sein kann, sorgt zudem für eine gute Beaufschlagung der Radikalfänger mit den Radikalen.

Als weiter vorteilhaft hat es sich gezeigt, wenn zumindest ein Teil des wenigstens einen Radikalfängers auf einem Sensor angeordnet ist. So kann eine Beladung des Radikalfängers mit Radikalen besonders gut ermittelt werden. Infolgedessen lässt sich der Reaktionsfortschritt der chemischen Reaktionen der Radikalfänger mit den Radikalen besonders gut feststellen. Dies ermöglicht es, bei Bedarf verbrauchte oder gesättigte Radikalfänger auszutauschen.

Der wenigstens eine Radikalfänger kann insbesondere auf einem Schwingquarz einer Mikrowaage angeordnet sein. Mittels eines solchen Sensors lässt sich eine Beladung des Radikalfängers mit Radikalen sehr genau überwachen. Es hierfür insbesondere ausreichend, wenn nur ein sehr geringer Anteil des insgesamt vorhandenen Radikalfängers auf dem Schwingquarz immobilisiert ist. Dies reicht nämlich zum Ermitteln der Beladung des Radikalfängers aus und ist für die Materialbilanz der elektrischen Anlage unerheblich.

Hierbei hat es sich als vorteilhaft gezeigt, wenn die Mikrowaage oder ein solcher Sensor mit einer Auswerteeinrichtung gekoppelt ist, mittels welcher sich ein Reagieren des wenigstens einen auf dem Sensor angeordneten Radikalfängers mit einem Radikal feststellen lässt. Die Auswerteeinrichtung ermöglicht also auf besonders einfache Art und Weise eine Überwachung des Zustands der Radikalfänger im Hinblick auf deren Beladung mit Radikalen. Insbesondere kann die Auswerteeinrichtung ein Signal ausgeben, wenn aufgrund der Beladung des Radikalfängers ein Austauschen des Radikalfängers vorgenommen werden sollte.

Als Radikalfänger kann insbesondere eine Triphenylcarbon zum Einsatz kommen, also eine Kohlenstoffverbindung mit drei Phenylresten an einem Kohlenstoffatom, welche auch als Triphenylmethanderivat bezeichnet werden kann. Jedoch kommen auch ein Peroxid, ein Amin, ein Epoxid oder ein Sulfid, insbesondere ein Disulfid und/oder ein Trisulfid, als der wenigstens eine Radikalfänger in Frage. Auch sind Derivate solcher Verbindungen als Radikalfänger einsetzbar. Derartige Radikalfänger haben sich als besonders geeignet erwiesen, Radikale aus dem elektrisch isolierenden Gas zu entfernen.

Schließlich hat es sich als vorteilhaft gezeigt, wenn das elektrisch isolierende Gas wenigstens eine fluorierte Kohlenstoffverbindung umfasst. Als fluorierte Kohlenstoffverbindungen können insbesondere Hydrofluorolefine und/oder fluorierte Ketone und/oder fluorierte Nitrile zum Einsatz kommen. Neben Fluor enthalten die das elektrisch isolierende Gas bildenden Substanzen somit bevorzugt Kohlenstoff, Wasserstoff und typischerweise Sauerstoff und/oder Stickstoff. Derartige elektrisch isolierende Gase weisen in vielen Fällen die für die elektrische Anlage vorteilhaften Isolationseigenschaften und einen hinreichend hohen Dampfdruck auf, um als gasförmiges Isolationsmedium fungieren zu können. Die elektrisch isolierenden Gase aus fluorierten Kohlenstoffverbindungen haben zudem in vorteilhafter Weise ein deutlich geringeres Treibhauspotential als Schwefelhexafluorid.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- FIG 1: eine elektrische Anlage, bei welcher ein gasisoliertes Gehäuse über Rohrleitungen mit einer Regeneriereinheit verbunden ist, in welcher ein immobilisierter Radikalfänger angeordnet ist;
- FIG 2: beispielhaft eine Reaktion eines Radikalfängers in Form eines Disulfids mit einem Radikal; und
- FIG 3: beispielhaft und schematisch die Reaktion eines weiteren als Radikalfänger dienenden Disulfids, welches auf einem Substrat immobilisiert ist, wobei das Substrat auf einem Schwingquarz einer Mikrowaage angeordnet ist.

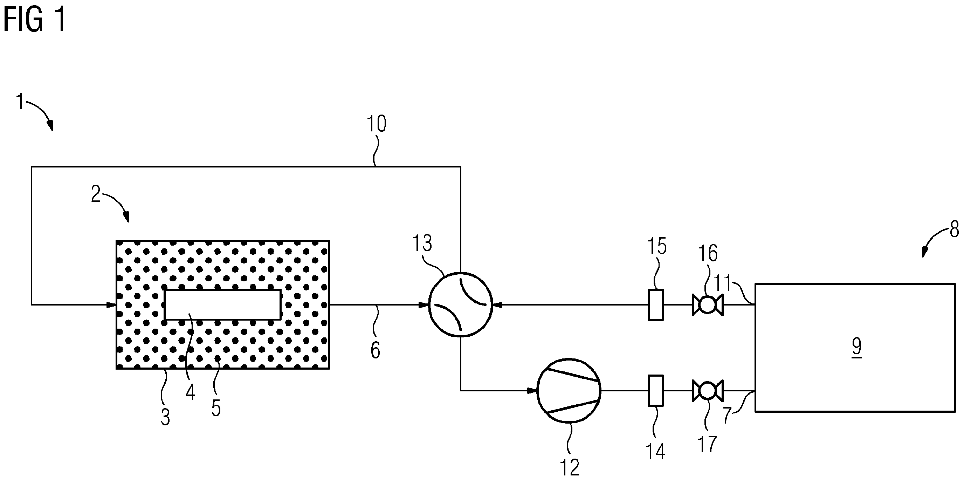

Eine in FIG 1 gezeigte elektrische Anlage 1 umfasst eine gasisolierte Einrichtung 2, bei welcher es sich beispielsweise um eine gasisolierte Schaltanlage oder eine gasisolierte Leitung handeln kann. Innerhalb eines Gehäuses 3 der gasisolierten Einrichtung 2 findet sich ein elektrisches Bauteil 4. Das elektrische Bauteil 4 kann bei der gasisolierten Leitung als elektrischer Leiter ausgebildet sein und bei einer gasisolierten Schaltanlage als Schalteinrichtung, etwa als Leistungsschalter oder als Lasttrennschalter. Ist die gasisolierte Einrichtung 2 als gasisolierte Leitung ausgebildet, so kann es sich bei dem gasdichten Gehäuse 3 um eine elektrisch isolierende Hülle handeln.

Das elektrische Bauteil 4 ist von einem elektrisch isolierenden Gas 5 umgeben, bei welchem es sich bevorzugt um ein wenigstens eine fluorhaltige organische Substanz enthaltendes Gas handelt. Beispielsweise können als fluorhaltige, organische Substanz in dem elektrisch isolierende Gas 5 Hydrofluorolefine, fluorierte Ketone, insbesondere perfluorierte Ketone, oder fluorierte Nitrile zum Einsatz kommen. Weiterhin können in dem elektrisch isolierenden Gas 5 beispielsweise anorganische Substanzen enthalten sein, mit deren Hilfe der Gesamtdruck des Gases 5 und die Konzentration der wenigstens einen fluorhaltigen organischen Substanz eingestellt werden können.

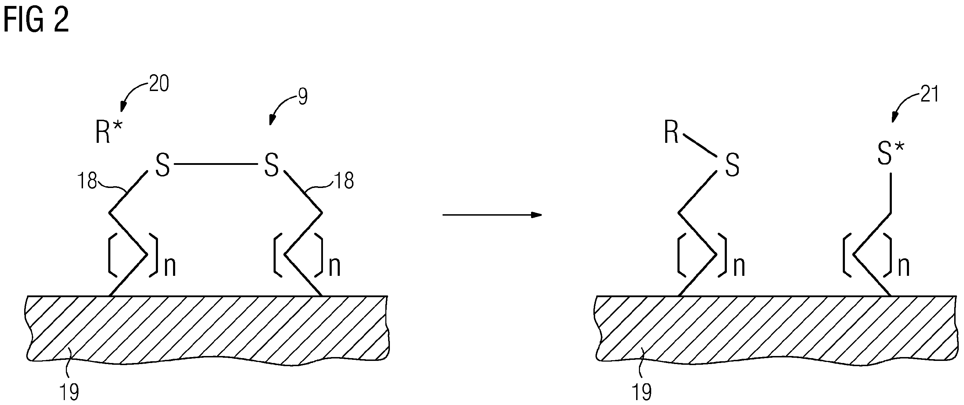

Derartige, das elektrisch isolierende Gas 5 bildende Substanzen, aufgrund der niedrigeren Ionisations- und Dissoziationsenergie insbesondere die fluorierten organischen Substanzen, können durch in der gasisolierten Einrichtung 2 auftretende Entladungen, aufgrund von radioaktivem Zerfall oder durch die Wirkung von kosmischer Strahlung zersetzt werden. Hierbei kann es insbesondere zur Bildung von Radikalen 20 kommen, also von Molekülen mit mindestens einem ungepaarten Elektron (vergleiche FIG 2). Derartige Radikale 20 neigen jedoch zu Kettenreaktionen, welche ein Zersetzen weiterer Moleküle des organischen Isolationsmediums, also des Gases 5 bewirken können. Diese Reaktionen finden zudem kontinuierlich statt, so dass das elektrisch isolierende Gas 5 selbst im Stillstand der gasisolierten Einrichtung 2 solchen Zersetzungsprozessen unterworfen sein kann. Durch die Zersetzung der Moleküle des elektrisch isolierenden Gases 5 kann es zudem zur Bildung von toxischen Substanzen oder festen Ablagerungen innerhalb der gasisolierten Einrichtung 2 kommen.

Um dem entgegenzuwirken, ist vorliegend die gasisolierte Einrichtung 2 über eine erste Leitung etwa in Form einer Rohrleitung 6 mit einem Einlass 7 einer Regeneriereinheit 8 verbunden. In der Regeneriereinheit 8 befindet sich wenigstens ein Radikalfänger 9. Dieser Radikalfänger 9 ist kein Adsorbens, an welches sich Radikale 20 anlagern, sondern der Radikalfänger 9 initiiert eine chemische Reaktion der Radikale 20 (vergleiche FIG 2).

Wenn der Radikalfänger 9 als sogenannter reversibler Radikalfänger ausgebildet ist, dann katalysiert er eine Rekombination von zwei Radikalen 20, ohne dass der Radikalfänger 9 hierbei selbst verbraucht wird. Vorteilhaft ist in der Regenerationseinheit 8 jedoch ein irreversibler Radikalfänger 9 angeordnet, also eine Substanz die mit einem Radikal 20 chemisch reagiert, aber im Gegensatz zum reversiblen Radikalfänger nicht in ihre Ursprungsform zurückreagiert. Der irreversible Radikalfänger 9 reagiert somit im Verlauf seines Einsatzes ab.

Vorliegend ist der Radikalfänger 9 in der Regeneriereinheit 8 oder Regenerationseinheit immobilisiert. Er ist also auf einem Substrat 19 angeordnet (vergleiche FIG 2) und verbleibt in der Regeneriereinheit 8. Bei dem Substrat 19 kann es sich insbesondere um einen Feststoff mit einer großen spezifischen Oberfläche wie Kieselgel, Aerogel, poröses Glas, Aluminiumoxid, Zeolith oder Aktivkohle handeln.

Vorliegend ist die gasisolierte Einrichtung 2 über eine weitere Leitung, welche als Rücklaufleitung 10 ausgebildet und an einen Auslass 11 der Regeneriereinheit 8 angeschlossen ist, mit der Regeneriereinheit 8 verbunden. In einer der Leitungen, beispielsweise in der Rohrleitung 6, ist bei der in FIG 1 gezeigten elektrischen Anlage 1 eine Fördereinrichtung in Form eines Gebläses 12 oder eines Kompressors angeordnet. Mittels dieses Gebläses 12 lässt sich das elektrisch isolierende Gas 5 von der gasisolierten Einrichtung 2 hin zur Regeneriereinheit 8 und von dieser über die Rücklaufleitung 10 wieder zur gasisolierten Einrichtung 2 fördern.

Mittels eines Ventils 13 kann eine fluidische Verbindung zwischen der gasisolierten Einrichtung 2 und der Regeneriereinheit 8 hergestellt oder alternativ diese fluidische Verbindung unterbrochen werden. Vorliegend ist das Ventil 13 als sogenanntes 4-Port-Ventil ausgebildet, also als Ventil mit vier Anschlüssen. In der in FIG 1 gezeigten Stellung des Ventils 13 ist die gasisolierte Einrichtung 2 mit der Regeneriereinheit 8 verbunden, und das Gebläse 12 kann Gas mit Radikalen 20 und dergleichen Zersetzungsprodukten hin zur Regeneriereinheit 8 fördern. In alternativen Ausführungsformen kann anstelle des 4-Port-Ventils auch jeweils ein Ventil in der Rohrleitung 6 und in der Rücklaufleitung 10 vorgesehen sein. Das 4-Port-Ventil ist jedoch besonders kompakt und Bauraum sparend.

Bei der in FIG 1 gezeigten elektrischen Anlage 1 sind sowohl in der Rohrleitung 6 als auch in der Rücklaufleitung 10 jeweilige Verbindungselemente 14, 15 angeordnet, welche es ermöglichen, die Regeneriereinheit 8 von den mit der gasisolierten Einrichtung 2 verbundenen Teilen der Rohrleitung 6 einerseits und der Rücklaufleitung 10 andererseits abzukoppeln. Durch das Vorsehen der Verbindungselemente 14, 15 kann daher die Regeneriereinheit 8 bei Bedarf ausgetauscht werden. Die Verbindungselemente 14, 15 können insbesondere als Verschraubungen ausgeführt sein.

Als Verbindungselemente 14, 15 können jedoch auch insbesondere verschließbare Ventile mit Verschraubungen sowie Flansche, Kupplungen oder dergleichen vorgesehen sein. Durch Lösen der Verbindungselemente 14, 15 lässt sich die Regeneriereinheit 8 abkoppeln und durch eine neue Regeneriereinheit 8 mit unverbrauchtem Radikalfänger 9 ersetzen. Aufgrund des Vorsehens der lösbaren Verbindungselemente 14, 15 ist die Regeneriereinheit 8 also austauschbar ausgeführt, so dass sie bei Bedarf ausgewechselt werden kann. Beim Austauschen der Regeneriereinheit 8 braucht jedoch der Betrieb der gasisolierten Einrichtung 2 nicht unterbrochen zu werden.

In einer alternativen Ausführungsform kann das Gebläse 12 oder dergleichen Fördereinheit, welche für den Stoffaustausch zwischen der gasisolierten Einrichtung 2 und der Regeneriereinheit 8 sorgt, auch zwischen dem Verbindungselement 14 und dem Einlass 7 angeordnet sein und nicht wie in FIG 1 gezeigt zwischen dem Verbindungselement 14 und der gasisolierten Einrichtung 2. Dann wird bei einem Austausch der Regeneriereinheit 8 auch das Gebläse 12 mit ausgetauscht. Des Weiteren kann das Gebläse 12 auch in der Rücklaufleitung 10 angeordnet sein, und zwar auch hier entweder stromabwärts oder stromaufwärts des in der Rücklaufleitung 10 angeordneten Verbindungselements 15.

Sowohl zwischen dem Verbindungselement 14 und dem Einlass 7 als auch zwischen dem Auslass 11 und dem Verbindungselement 15 sind vorliegend weitere Ventile 16, 17 in den jeweiligen Leitungen angeordnet. Diese Ventile 16, 17 können optional vorgesehen sein, um die Regeneriereinheit 8 fluidisch von der gasisolierten Einrichtung 2 zu trennen. Anstelle der beiden (optionalen) Ventile 16, 17 kann auch ein 4-Port-Ventil vorgesehen sein. Insbesondere kann durch das Vorsehen der Ventile 16, 17 bei von den jeweiligen Abschnitten der Rohrleitung 6 und der Rücklaufleitung 10 abgekoppelter Regeneriereinheit 8 dafür gesorgt werden, dass keine Substanzen aus der Regeneriereinheit 8 austreten oder in diese hineingelangen können.

Beispielsweise enthält die Regeneriereinheit 8 den Radikalfänger 9 in immobilisierter Form. Die Funktionsweise des immobilisierten Radikalfängers 9 soll am Beispiel eines Disulfids veranschaulicht werden (vergleiche FIG 2).

Auf der linken Seite in FIG 2 ist schematisch gezeigt, wie das Disulfid (als Beispiel für den immobilisierten Radikalfänger 9) über Kohlenwasserstoffketten 18 oder dergleichen mit dem Substrat 19 verbunden ist. Ein Radikal 20, welches aus dem organischen elektrisch isolierenden Gas 5 entstanden ist, gelangt durch die Wirkung des Gebläses 12 in die Nähe des Disulfids. Der Stern in FIG 2 symbolisiert hierbei ein ungepaartes Elektron des Radikals 20.

Wie auf der rechten Seite in FIG 2 gezeigt, kann das Disulfid unter Bildung eines Schwefelradikals 21 mit dem Radikal 20 reagieren und so das Radikal 20 an Ort und Stelle festhalten. In analoger Weise kann das bei der Reaktion des Disulfids mit dem Radikal 20 gebildete Schwefelradikal 21 mit einem weiteren Radikal aus der Gasphase reagieren. Das aus dem Schwefelradikal 21 und dem (nicht gezeigten) weiteren Radikal gebildete Produkt wird ebenso an Ort und Stelle festgehalten.

Der irreversible Radikalfänger 9 in Form des Disulfids reagiert also selektiv mit Radikalen 20 aus dem Gasvolumen, welches innerhalb der gasisolierten Einrichtung 2 vorhanden ist. Bei dem irreversiblen Radikalfänger 9 erfolgt ein Verbrauch des Radikalfängers 9 aufgrund der chemischen Reaktion mit dem Radikal 20. So werden die Reaktionsprodukte gebunden und innerhalb der Regeneriereinheit 8 zurückgehalten.

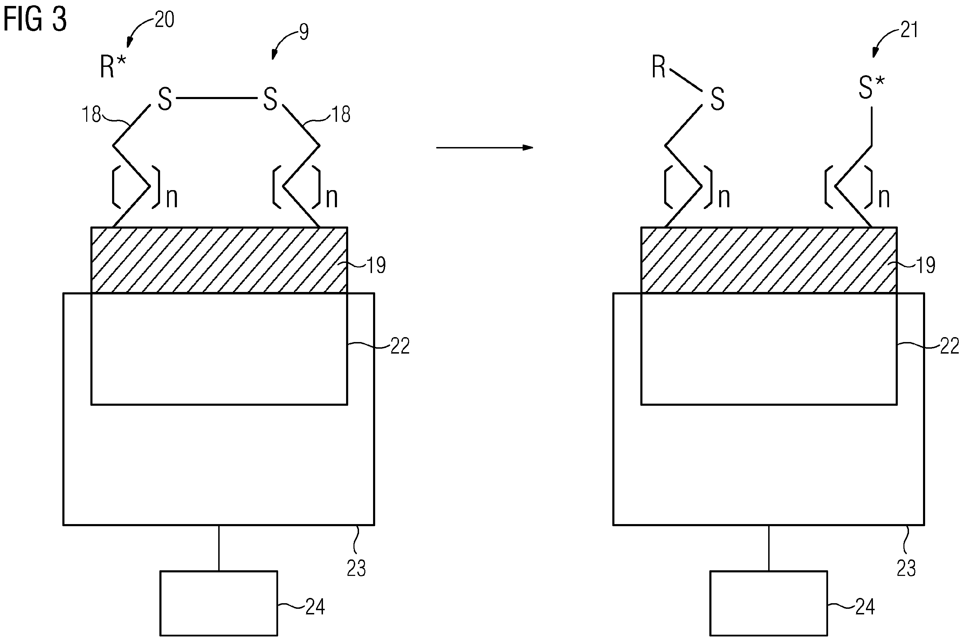

Zumindest ein Teil des Radikalfängers 9 kann, wie in FIG 3 schematisch gezeigt ist auf einem Schwingquarz 22 einer Mikrowaage 23 immobilisiert sein. Hierbei kann eine Beladung des Radikalfängers 9 mit Radikalen 20 überwacht oder monitort werden, etwa indem die Mikrowaage 23 mit einer Auswerteeinrichtung 24 gekoppelt ist, welche als Mikroprozessor ausgebildet sein kann. Durch das Immobilisieren eines Teils des irreversiblen Radikalfängers 9 auf dem Schwingquarz 22 der Mikrowaage 23 kann der Umsetzungsgrad der Radikalfänger 9 oder des Radikalfängers 9 online über eine Änderung der Eigenfrequenz des Schwingquarzes 22 detektiert werden.

Das Immobilisieren des wenigstens einen Radikalfängers 9 auf dem Schwingquarz 22 der Mikrowaage 23 ermöglicht es also, den Reaktionsfortschritt des irreversiblen Radikalfängers 9 direkt zu erfassen. So kann erkannt werden, wann die Regeneriereinheit 8 ersetzt werden sollte. Anstelle der Mikrowaage 23 kann auch ein nach dem Prinzip der Mikrowaage 23 arbeitender Sensor zum Einsatz kommen, welcher es zulässt, eine Beladung des Radikalfängers 9 mit dem Radikal 20 zu quantifizieren.

Anstelle des beispielhaft als Radikalfänger 9 genannten Disulfids können auch andere Radikalfänger 9 zum Einsatz kommen, welche in der Lage sind Radikale 20 zumindest zeitweise zu binden und deren Energiegehalt so abzusenken, dass sie nicht mehr mit dem elektrisch isolierenden Gas 5 reagieren können. Beispielsweise können Triphenylcarbon-Derivate, Peroxo-Verbindungen, Amine und Oxirane zum Einsatz kommen.

In einer (nicht gezeigten) Variante der elektrischen Anlage 1 kann in der Regeneriereinheit 8 der immobilisierte Radikalfänger 9 vorhanden sein und in dem Gehäuse 3 ein mobiler Radikalfänger 9, also ein Radikalfänger 9 in der Gasphase. Dann kann der mobile Radikalfänger 9 in der Regeneriereinheit 8 regeneriert werden, indem ein mit einem Radikal 20 beladener, mobiler Radikalfänger 9 mit einem der immobilisierten Radikalfänger 9 in der Regeneriereinheit 8 reagiert. Hierbei wird dann der mobile Radikalfänger 9 wieder freigesetzt.

## Patentansprüche

1. Elektrische Anlage (1) mit einem Gehäuse (3), in welchem wenigstens ein elektrisches Bauteil (4) aufgenommen ist, welches von einem elektrisch isolierenden Gas (5) umgeben ist, wobei in der elektrischen Anlage (1) wenigstens ein Radikalfänger (9) vorhanden ist,
**dadurch gekennzeichnet, dass**
der wenigstens eine Radikalfänger (9) auf einem Substrat (19) immobilisiert ist.

2. Elektrische Anlage nach Anspruch 1,
**dadurch gekennzeichnet, dass**
der wenigstens eine Radikalfänger (9) auf einem Kieselgel und/oder einem bevorzugt porösen Glas und/oder einem Aluminiumoxid und/oder einem Zeolith und/oder auf Aktivkohle und/oder einem Aerogel immobilisiert ist.

3. Elektrische Anlage nach Anspruch 1 oder 2,
**dadurch gekennzeichnet, dass**
der wenigstens eine Radikalfänger (9) einen reversiblen, insbesondere ein Phenol und/oder ein Phenolderivat umfassenden, Radikalfänger (9) umfasst, welcher eine chemische Reaktion zweier Radikale (20) miteinander in der elektrischen Anlage (1) katalysiert.

4. Elektrische Anlage nach einem der Ansprüche 1 bis 3,
**dadurch gekennzeichnet, dass**
der wenigstens eine Radikalfänger (9) einen irreversiblen Radikalfänger (9) umfasst, dessen Gehalt in der elektrischen Anlage (1) infolge einer chemischen Reaktion des Radikalfängers (9) mit einem Radikal (20) sinkt.

5. Elektrische Anlage nach einem der Ansprüche 1 bis 4,
**dadurch gekennzeichnet, dass**
das Gehäuse (3) über wenigstens eine Leitung (6, 10) mit einer Regeneriereinheit (8) verbunden ist, in welcher der wenigstens eine Radikalfänger (9) angeordnet ist.

6. Elektrische Anlage nach Anspruch 5, **gekennzeichnet durch** wenigstens ein Verbindungselement (14, 15), mittels welchem sich die Regeneriereinheit (8) mit dem Gehäuse (3) und/oder mit der wenigstens einen Leitung (6, 10) koppeln oder von dem Gehäuse (3) und/oder der wenigstens einen Leitung (6, 10) abkoppeln lässt.

7. Elektrische Anlage nach Anspruch 5 oder 6, **gekennzeichnet durch** eine Fördereinrichtung (12) zum Erzeugen einer Strömung des elektrisch isolierenden Gases (5) von dem Gehäuse (3) zu der Regeneriereinheit (8).

8. Elektrische Anlage nach einem der Ansprüche 1 bis 7,
**dadurch gekennzeichnet, dass**
der wenigstens eine Radikalfänger (9) zumindest teilweise auf einem Sensor, insbesondere auf einem Schwingquarz (22) einer Mikrowaage (23), angeordnet ist.

9. Elektrische Anlage nach Anspruch 8,
**dadurch gekennzeichnet, dass**
der Sensor, insbesondere die Mikrowaage (23), mit einer Auswerteeinrichtung (24) gekoppelt ist, mittels welcher sich ein Reagieren des wenigstens einen auf dem Sensor, insbesondere auf dem Schwingquarz (22) der Mikrowaage (23), angeordneten Radikalfängers (9) mit einem Radikal (20) feststellen lässt.

10. Elektrische Anlage nach einem der Ansprüche 1 bis 9,
**dadurch gekennzeichnet, dass**
der wenigstens eine Radikalfänger (9) ein Triphenylcarbon und/oder ein Peroxid und/oder ein Amin und/oder ein Epoxid und/oder ein Sulfid, insbesondere ein Disulfid und/oder ein Trisulfid, und/oder ein Derivat einer solchen Verbindung umfasst.

11. Elektrische Anlage nach einem der Ansprüche 1 bis 10,
**dadurch gekennzeichnet, dass**
das elektrisch isolierende Gas (5) wenigstens eine fluorierte Kohlenstoffverbindung, insbesondere ein Hydrofluorolefin und/oder ein fluoriertes Keton und/oder ein fluoriertes Nitril, umfasst.

## Claims

1. Electrical system (1) comprising a housing (3), contained in which there is at least one electrical component (4), which is surrounded by an electrically insulating gas (5), wherein there is at least one radical scavenger (9) in the electrical system (1),
**characterized in that**
the at least one radical scavenger (9) is immobilized on a substrate (19).

2. Electrical system according to Claim 1,
**characterized in that**
the at least one radical scavenger (9) is immobilized on a silica gel and/or a preferably porous glass and/or an alumina and/or a zeolite and/or active carbon and/or an aerosol.

3. Electrical system according to Claim 1 or 2,
**characterized in that**
the at least one radical scavenger (9) comprises a reversible radical scavenger (9), which comprises in particular a phenol and/or a phenol derivative and which catalyses a chemical reaction of two radicals (20) with one another in the electrical system (1).

4. Electrical system according to one of Claims 1 to 3,
**characterized in that**
the at least one radical scavenger (9) comprises an irreversible radical scavenger (9), the content of which in the electrical system (1) falls as a result of a chemical reaction of the radical scavenger (9) with a radical (20).

5. Electrical system according to one of Claims 1 to 4,
**characterized in that**
the housing (3) is connected via at least one line (6, 10) to a regenerating unit (8), in which the at least one radical scavenger (9) is arranged.

6. Electrical system according to Claim 5, **characterized by** at least one connecting element (14, 15), by means of which the regenerating unit (8) can be coupled to the housing (3) and/or to the at least one line (6, 10) or can be uncoupled from the housing (3) and/or the at least one line (6, 10).

7. Electrical system according to Claim 5 or 6, **characterized by** a delivery device (12) for producing a flow of the electrically insulating gas (5) from the housing (3) to the regenerating unit (8).

8. Electrical system according to one of Claims 1 to 7,
**characterized in that**
the at least one radical scavenger (9) is at least partially arranged on a sensor, in particular on an oscillating quartz crystal (22) of a microbalance (23).

9. Electrical system according to Claim 8,
**characterized in that**
the sensor, in particular the microbalance (23), is coupled to an evaluation device (24), by means of which a reaction of the at least one radical scavenger (9) with a radical (20) that is arranged on the sensor, in particular on the oscillating quartz crystal (22) of the microbalance (23), can be established.

10. Electrical system according to one of Claims 1 to 9,
**characterized in that**
the at least one radical scavenger (9) comprises a triphenyl carbon and/or a peroxide and/or an amine and/or an epoxide and/or a sulfide, in particular a disulfide and/or a trisulfide, and/or a derivative of such a compound.

11. Electrical system according to one of Claims 1 to 10,
**characterized in that**
the electrically insulating gas (5) comprises at least one fluorinated hydrocarbon compound, in particular a hydrofluoroolefin and/or a fluorinated ketone and/or a fluorinated nitrile.

## Revendications

1. Installation (1) électrique ayant une enveloppe (3), dans laquelle est reçue au moins une pièce (4) électrique entourée d'un gaz (5) isolant électriquement, au moins un capteur (9) de radicaux étant présent dans l'installation (1) électrique,
**caractérisée en ce que**
le au moins un capteur (9) de radicaux est immobilisé sur un substrat (19).

2. Installation électrique suivant la revendication 1,
**caractérisée en ce que**
le au moins un capteur (9) de radicaux est immobilisé sur un gel de silice et/ou sur un verre, de préférence poreux, et/ou sur un oxyde d'aluminium et/ou sur une zéolite et/ou sur du charbon actif et/ou sur un aérogel.

3. Installation électrique suivant la revendication 1 ou 2,
**caractérisée en ce que**
le au moins un capteur (9) de radicaux comprend un capteur (9) de radicaux réversible, comprenant notamment un phénol et/ou un dérivé phénolique, qui catalyse une réaction chimique de deux radicaux (20) entre eux dans l'installation (1) électrique.

4. Installation électrique suivant l'une des revendications 1 à 3,
**caractérisée en ce que**
le au moins un capteur (9) de radicaux comprend un capteur (9) de radicaux irréversible, dont la teneur dans l'installation (1) électrique diminue en raison d'une réaction chimique du capteur (9) de radicaux sur un radical (20).

5. Installation électrique suivant l'une des revendications 1 à 4,
**caractérisée en ce que**
l'enveloppe communique, par au moins un conduit (6, 10), avec une unité (8) de régénération, dans laquelle le au moins un capteur (9) de radicaux est disposé.

6. Installation électrique suivant la revendication 5, **caractérisée en ce qu'**au moins un élément (14, 15) de liaison, au moyen duquel l'unité (8) de régénération peut être couplée à l'enveloppe (3), et/ou au au moins un conduit (6, 10) ou être découplée de l'enveloppe (3) et/ou du au moins un conduit (6, 10).

7. Installation électrique suivant la revendication 5 ou 6, **caractérisée par** un dispositif (12) de transport pour produire un courant du gaz (5) isolant électriquement de l'enveloppe (3) à l'unité (8) de régénération.

8. Installation électrique suivant l'une des revendications 1 à 7,
**caractérisée en ce que**
le au moins un capteur (9) de radicaux est disposé, au moins en partie, sur un détecteur, notamment sur un quartz (22) oscillant d'une microbalance (23).

9. Installation électrique suivant la revendication 8,
**caractérisée en ce que**
le détecteur, notamment la microbalance (23), est relié à un dispositif (24) d'exploitation, au moyen duquel une réaction du au moins un capteur (9) de radicaux mis sur le détecteur, notamment sur le quartz (22) oscillant de la microbalance (23), sur un radical (20) peut être constatée.

10. Installation électrique suivant l'une des revendications 1 à 9,
**caractérisée en ce que**
le au moins un capteur (9) de radicaux comprend un carbone triphényle et/ou un peroxyde et/ou une amine et/ou un époxyde et/ou un sulfure, notamment un disulfure et/ou un trisulfure, et/ou un dérivé d'un composé de ce genre.

11. Installation électrique suivant l'une des revendications 1 à 10,
**caractérisée en ce que**
le gaz (5) isolant électriquement comprend au moins un composé carboné fluoré, notamment une hydrofluoroléfine et/ou une cétone fluorée et/ou un nitrile fluoré.
